# FASCICULE DE BREVET EUROPEEN

(11) **EP 0 670 683 B1**
(45) Date de publication et mention de la délivrance du brevet: **11.09.1996**
(21) Numéro de dépôt: 94901830.3
(22) Date de dépôt: 18.11.1993
(51) Int. Cl.: A23L 1/237, A23L 1/236

(54) **SEL ALIMENTAIRE**
NAHRSALZ
EDIBLE SALT

(30) Priorité: 27.11.1992 FR 9214493
(43) Date de publication de la demande: 13.09.1995
(73) Titulaire: SALINES CEREBOS (Société Anonyme), F-54110 Dombasle-sur-Meurthe (FR)
(72) Inventeur: KLEIN, Christian, F-54000 Nancy (FR)
(74) Mandataire: Anthoine, Paul
(86) Numéro de dépôt international: EP9303253
(87) Numéro de publication internationale: WO9412059

(56) Documents cités:
- EP-A- 0 094 088
- EP-A- 0 130 822
- WO-A-85/00958
- WO-A-88/09131
- CA-A- 1 147 653
- LU-A- 55 272
- PATENT ABSTRACTS OF JAPAN vol. 7, no. 175 (C-179)3 Mars 1983 & JP,A,58 081 758 (TANPEI SEIYAKU) 17 Mai 1983

## Description

L'invention concerne du sel alimentaire utilisable comme sel de table ou pour l'assaisonnement dans les préparations culinaires.

Elle concerne plus particulièrement un sel alimentaire utilisable comme substitut du chlorure de sodium communément utilisé comme sel de table, dans les techniques de salaison et dans les préparations culinaires.

L'ingestion de sodium par l'être humain est fréquemment accusée d'être à l'origine d'affections cardiovasculaires. Or une importante source de sodium dans l'alimentation humaine est constituée par le chlorure de sodium communément utilisé pour l'assaisonnement des aliments. Des tentatives ont dès lors été entreprises en vue de trouver des substituts au chlorure de sodium dans l'alimentation humaine.

Il s'est par ailleurs révélé souhaitable d'augmenter l'apport de potassium dans l'alimentation humaine, d'un point de vue à la fois nutritionnel et physiologique.

Pour atteindre ces objectifs on propose, dans le document BE-A-709091 (MORTON INTERNATIONAL, INC.), une composition saline d'assaisonnement culinaire, consistant en un mélange de chlorure de sodium et de chlorure de potassium. Toutefois, compte tenu de l'amertume prononcée du chlorure de potassium, la teneur en ce constituant dans ce sel alimentaire connu doit être limitée à une valeur pouvant difficilement excéder 20 % en poids.

Dans le document CA-A-1147653 (CPC INTERNATIONAL, INC.), on propose un sel thérapeutique contitué d'un mélange de chlorure de sodium et de maltodextrine. Dans ce sel thérapeutique connu, la maltodextrine constitue une matière de charge dont la fonction est de diluer le chlorure de sodium. Compte tenu de son caractère sensiblement insipide, la maltodextrine permet difficilement de réduire la quantité de chlorure de sodium nécessaire pour obtenir une saveur salée déterminée. Par ailleurs, ce sel thérapeutique connu ne permet pas de compenser une déficience en potassium dans l'alimentation.

Dans le document WO 88/09131 (STAUFFER MANAGEMENT COMPANY), on propose un sel diététique qui remédie aux inconvénients précités et qui, à cet effet, comprend du chlorure d'ammonium, du chlorure de potassium et une substance édulcorante. Le sucrose, la dextrose, le fructose et l'aspartam sont cités comme exemples de substance édulcorante, le sucrose étant toutefois spécialement recommandé, en une quantité au moins égale à 20 % du poids global du sel diététique. La présence d'au moins 20 % de sucrose dans le sel diététique a toutefois pour effet d'augmenter la teneur calorifique de l'alimentation, ce qui peut constituer un inconvénient.

L'invention tend à remédier aux désavantages des compositions connues décrites plus haut, en fournissant un sel alimentaire qui permet à la fois de réduire l'apport en sodium et d'augmenter l'apport en potassium dans l'alimentation et les préparations culinaires.

L'invention concerne dès lors un sel alimentaire comprenant, pour 100 parties en poids de matière anhydre, de 82 à 98 parties de chlorure de métal alcalin et de 2 à 18 parties d'une substance édulcorante, le chlorure de métal alcalin comprenant plus de 20 % en poids de chlorure de potassium et la substance édulcorante comprenant un dipeptide et un produit d'hydrolyse de l'amidon.

On entend désigner par sel alimentaire une composition présentant une saveur salée, qui la rend utilisable comme substitut du chlorure de sodium pur en tant que sel de table ou pour la salaison des aliments dans les préparations culinaires.

Par la suite, pour l'énoncé des quantités ou fractions pondérales, les constituants du sel alimentaire selon l'invention sont considérés à l'état anhydre.

Dans le sel alimentaire selon l'invention, le chlorure de métal alcalin comprend plus de 20 % en poids de chlorure de potassium. Il peut être constitué de 100 % de chlorure de potassium ou comprendre, en plus du chlorure de potassium, du chlorure d'au moins un autre métal alcalin (l'ammonium étant assimilé aux métaux alcalins), généralement du chlorure de sodium. Le cas échéant, on préfère que la fraction pondérale du chlorure de sodium dans le chlorure de métal alcalin n'excède pas 80 %. On préconise que le chlorure de métal alcalin contienne une fraction pondérale de chlorure de potassium au moins égale à 40 %, de préférence à 55 % et une fraction pondérale de chlorure de sodium au maximum égale à 60 %, de préférence à 45 %. Des fractions pondérales de 60 à 67 % de chlorure de potassium et de 33 à 40 % de chlorure de sodium sont spécialement avantageuses.

La substance édulcorante a pour fonction de masquer l'amertume du chlorure de potassium et, à cet effet, elle comprend au moins un dipeptide et au moins un produit d'hydrolyse de l'amidon. Le dipeptide de la substance édulcorante doit posséder une saveur douce ou sucrée. A cet effet, on le sélectionne généralement parmi les dérivés de la phénylalanine substituée par de l'aspartyl. Des dipeptides spécialement recommandés, dans le cadre de l'invention, sont les esters alkyliques dérivés de la L-aspartyl-L-phénylalanine, leurs sels et leurs complexes métalliques. L'aspartam (ester méthylique de l'α-L-aspartyl-L-phénylalanine), ses sels et ses complexes métalliques sont spécialement avantageux. L'aspartam est préféré.

Le produit d'hydrolyse de l'amidon a pour fonction de stabiliser le dipeptide aux températures élevées, habituellement mises en oeuvre dans la cuisson des matières alimentaires en cuisine domestique et dans l'industrie culinaire. Il est avantageusement sélectionné parmi les polydextroses et les dextrines.

Les polydextroses utilisables dans le cadre de l'invention sont des polysaccharides hydrosolubles. Ils sont constitués, par définition, de substances polymériques dont les unités monomériques comprennent des monosaccharides, par exemple du glucose ou du maltose, éventuellement estérifiés avec des unités dérivées d'acides carboxyliques tels que l'acide citrique, l'acide fumarique, l'acide tartrique, l'acide adipique ou l'acide térephtalique. Des informations complémentaires concernant les polydextroses utilisables dans cette forme de réalisation particulière de l'invention sont accessibles dans le document EP-A-0100002 (G.D. SEARLE & Co.).

Les dextrines sont par définition des produits hydrosolubles résultant d'une dépolymérisation partielle de l'amidon. Les dextrines sont des polymères comprenant habituellement plus de 3 (généralement au moins 5) et moins de 20 (généralement pas plus de 10) unités monoglucidiques. Elles sont généralement caractérisées par leur taux équivalent de dextrose qui désigne, par définition, le rapport entre le pouvoir réducteur de 1 g de la dextrine considérée et le pouvoir réducteur de 1 g de dextrose. Selon l'invention, on sélectionne avantageusement des dextrines dont le taux équivalent de dextrose est supérieur à 2,5, de préférence au moins égal à 4 et est inférieur à 25, de préférence inférieur ou égal à 20. La préférence est donnée aux dextrines présentant un taux équivalent de dextrose n'excédant pas 13, les valeurs comprises entre 5 et 10 étant spécialement recommandées. Des informations complémentaires concernant les dextrines utilisables dans cette forme de réalisation particulière de l'invention sont accessibles dans le document CA-A-1147653 (CPC INTERNATIONAL INC.).

On préfère, selon l'invention, sélectionner le produit d'hydrolyse de l'amidon parmi les dextrines. Les maltodextrines sont spécialement recommandées, principalement celles qui présentent un taux équivalent de dextrose de 5 à 10.

Dans le sel alimentaire selon l'invention, le produit d'hydrolyse de l'amidon est avantageusement présent à raison de 90 à 99 % (de préférence de 95 à 98 %) du poids de la substance édulcorante, le dipeptide étant présent à raison de 1 à 10 % (de préférence de 2 à 5 %) de ce poids.

Dans une forme de réalisation particulière du sel alimentaire selon l'invention, celui-ci contient en outre de 0,5 à 10 % en poids d'un composé du magnésium. Dans cette forme de réalisation de l'invention, le composé du magnésium a pour fonction de réaliser un apport de magnésium dans l'alimentation. A cet effet, le composé du magnésium peut par exemple être sélectionné parmi le sulfate de magnésium anhydre ou hydraté et le carbonate de magnésium. Le sulfate de magnésium est spécialement avantageux, le sulfate de magnésium anhydre étant préféré. En variante, le sel alimentaire selon l'invention peut contenir simultanément du sulfate de magnésium (anhydre ou hydraté) et du carbonate de magnésium. Dans cette variante de l'invention, le carbonate de magnésium a pour fonction principale de servir d'agent dessicatif et d'agent d'écoulement du sel, le sulfate de magnésium servant essentiellement corne apport de magnésium dans l'alimentation. Dans cette variante avantageuse de l'invention, le composé de magnésium peut par exemple être constitué de 88 à 93 % en poids de sulfate de magnésium (de préférence au moins 95 %) et de 7 à 12 % en poids de carbonate de magnésium (de préférence au moins 2 %).

Le sel alimentaire selon l'invention peut en outre contenir éventuellement au moins un additif communément présent dans les compositions salines d'assaisonnement culinaire. On entend désigner par additif toute substance qui est utilisable dans les compositions salines destinées à l'alimentation humaine et qui n'est pas un chlorure des métal alcalin, un dipeptide, un produit d'hydrolyse de l'amidon, ni un composé du magnésium. Le ferrocyanure de potassium (communément utilisé comme agent dessicatif) et les herbes aromatiques constituent des exemples d'additifs utilisables dans le sel alimentaire selon l'invention. Dans le cas où le sel alimentaire selon l'invention contient un additif tel que défini ci-dessus, sa teneur pondérale en cet additif ne peut pas excéder 16 %, les teneurs inférieures à 10 % étant recommandées.

Le sel alimentaire selon l'invention présente la propriété de libérer, dans l'alimentation humaine, une saveur comparable à celle du chlorure de sodium. Dans son utilisation comme substitut du chlorure de sodium en tant que sel de table ou de cuisine pour les préparations culinaires, il présente la propriété avantageuse de réduire, voire supprimer, l'apport d'ions sodium dans l'organisme humain en constituant simultanément une source d'ions potassium et, éventuellement, d'ions magnésium.

Le sel alimentaire selon l'invention présente la particularité avantageuse supplémentaire de présenter une bonne stabilité thermique, le rendant utilisable à des températures supérieures à 80 °C, généralement au moins égales à 100 °C et pouvant même, dans certains cas, atteindre et dépasser 120 °C, sans encourir le risque d'une décomposition du dipeptide, même lorsque celui-ci est de l'aspartam. Le sel alimentaire selon l'invention est dès lors spécialement adapté à une utilisation dans l'industrie culinaire, pour la cuisson d'aliments.

Des compositions du sel alimentaire selon l'invention, qui combinent de manière optimum l'ensemble des avantages énoncés plus haut sont celles comprenant, en poids de matière sèche, de 52 à 60 % de chlorure de potassium, de 30 à 38 % de chlorure de sodium, de 6 à 8 % de sulfate de magnésium, de 0,6 à 0,8 % de carbonate de magnésium, de 2,0 à 2,5 % de maltodextrine et de 0,05 à 0,1 % d'aspartam.

Le sel alimentaire selon l'invention est obtenu par tous moyens appropriés pour assurer un mélange homogène de ses constituants. Un moyen spécialement approprié consiste à mélanger mécaniquement ces constituants à l'état pulvérulent.

Le sel alimentaire selon l'invention est utilisable comme condiment dans les activités domestiques, artisanales ou industrielles liées à l'art culinaire, par exemple en cuisine domestique, dans l'industrie de la restauration, pour la fabrication artisanale ou industrielle de produits destinés à l'alimentation humaine et pour la salaison des viandes ou jambons. A cet effet, le sel alimentaire selon l'invention peut se présenter sous toutes formes appropriées à son utilisation. Pour une utilisation en cuisine domestique ou dans l'industrie de la restauration, on peut par exemple le produire à l'état d'une poudre dont le diamètre des grains, mesuré par tamisage en appliquant la méthode normalisée de TYLER se situe entre 100 et 850 µm, de préférence entre 200 et 500 µm. En variante, le sel alimentaire peut être mis en oeuvre à l'état de grosses particules dont le diamètre excède 850 µm et se si tue par exemple entre 1 et 2,5 mm, cette variété du sel alimentaire selon l'invention convenant notamment pour la salaison des viandes et jambons. Selon une autre variante, le sel alimentaire selon l'invention peut être produit à l'état de pastilles obtenues par agglomération de fines particules.

Les exemples suivants servent à illustrer l'invention. Dans ces exemples, les granulométries des poudres mises en oeuvre ont été mesurées par tamisage en appliquant la méthode normalisée de TYLER.

### Exemple 1

On a préparé un sel alimentaire conforme à l'invention en opérant de la manière suivante.

On a d'abord préparé une substance édulcorante en mélangeant une maltodextrine avec de l'aspartam en quantités appropriées pour que le mélange résultant contienne 97 % en poids de maltodextrine et 3 % en poids d'aspartam. Pour la réalisation du mélange, la maltodextrine et l'aspartam ont été mis en oeuvre à l'état de poudres de granulométrie située entre 210 et 500 µm.

On a mis en oeuvre 2,3 g de la substance éducorante ainsi obtenue, que l'on a ensuite mélangée intimement aux substances suivantes, jusqu'à obtention d'une poudre homogène :
32,0 g d'une poudre de chlorure de sodium de 210 à 500 µm,
65,0 g d'une poudre de chlorure de potassium de 210 à 500 µm,
0,7 g d'une poudre de carbonate de magnésium de 210 à 500 µm.

### Exemple 2

En opérant comme à l'exemple 1, on a préparé un sel alimentaire conforme à l'invention à partir des substances suivantes :
32,0 g d'une poudre de chlorure de sodium de 210 à 500 µm,
50,0 g d'une poudre de chlorure de potassium de 210 à 500 µm,
15,0 g d'une poudre de sulfate de magnésium heptahydraté de 210 à 500 µm (ce qui correspond à environ 7,3 g de sulfate de magnésium anhydre),
0,7 g d'une poudre de carbonate de magnésium anhydre de granulométrie inférieure à 53 µm,
2,3 g de la substance édulcorante obtenue à l'exemple 1.

### Exemple 3

En opérant comme à l'exemple 1, on a préparé un sel alimentaire conforme à l'invention à partir des substances suivantes :
32,0 g d'une poudre de chlorure de sodium de 210 à 500 µm,
58,0 g d'une poudre de chlorure de potassium de 210 à 500 µm,
7,0 g d'une poudre de sulfate de magnésium anhydre de 210 à 500 µm,
0,7 g d'une poudre de carbonate de magnésium anhydre de granulométrie inférieure à 53 µm,
2,3 g de la substance édulcorante obtenue à l'exemple 1,

## Revendications

1. Sel alimentaire comprenant, pour 100 parties en poids de matière anhydre, de 82 à 98 parties de chlorure de métal alcalin et de 2 à 18 parties d'une substance édulcorante, le chlorure de métal alcalin comprenant plus de 20 % en poids de chlorure de potassium et la substance édulcorante comprenant un dipeptide et un produit d'hydrolyse de l'amidon.

2. Sel selon la revendication 1, caractérisé en ce que le dipeptide est sélectionné parmi les esters alkyliques dérivés de la L-aspartyl-L-phénylalanine, leurs sels et leurs complexes métalliques.

3. Sel selon la revendication 2, caractérisé en ce que le dipeptide comprend de l'ester méthylique de l'α-L-aspartyl-L-phénylalanine (aspartam).

4. Sel selon l'une quelconque des revendications 1 à 3, caractérisé en ce que le produit d'hydrolyse de l'amidon comprend une dextrine.

5. Sel selon la revendication 4, caractérisé en ce que la dextrine est sélectionnée parmi les maltodextrines présentant un taux équivalent de dextrose de 5 à 10.

6. Sel selon l'une quelconque des revendications 1 à 5, caractérisé en ce que la substance édulcorante comprend de 95 à 98 % en poids du produit d'hydrolyse de l'amidon et de 2 à 5 % en poids du dipeptide.

7. Sel selon l'une quelconque des revendications 1 à 6, caractérisé en ce qu'il comprend en outre de 0,5 à 10 % en poids d'un composé du magnésium.

8. Sel selon la revendication 7, caractérisé en ce que le composé du magnésium comprend, en poids de matière sèche, au moins 95 % de sulfate de magnésium et au moins 2 % de carbonate de magnésium.

9. Sel selon l'une quelconque des revendications 1 à 8, caractérisé en ce que le chlorure de métal alcalin comprend de 60 à 67 % en poids de chlorure de potassium et de 33 à 40 % en poids de chlorure de sodium.

10. Sel selon la revendication 9, comprenant, en poids de matière sèche, de 52 à 60 % de chlorure de potassium, de 30 à 38 % de chlorure de sodium, de 6 à 8 % de sulfate de magnésium, de 0,6 à 0,8 % de carbonate de magnésium, de 2,0 à 2,5 % de maltodextrine et de 0,05 à 0,1 % de l'ester méthylique de l'α-L-aspartyl-L-phénylalanine (aspartam).

11. Sel selon l'une quelconque des revendications 1 à 9, caractérisé en ce qu'il comprend en outre au moins un additif en une quantité au maximum égale à 16 % en poids.

## Claims

1. Food salt comprising, for 100 parts by weight of anhydrous matter, 82 to 98 parts of alkali metal chloride and 2 to 18 parts of a sweetening substance, the alkali metal chloride comprising more than 20% by weight of potassium chloride and the sweetening substance comprising a dipeptide and a starch hydrolysis product.

2. Salt according to Claim 1, characterized in that the dipeptide is selected from alkyl esters derived from L-aspartyl-L-phenylalanine, their salts and their metal complexes.

3. Salt according to Claim 2, characterized in that the dipeptide comprises α-L-aspartyl-L-phenylalanine methyl ester (aspartame).

4. Salt according to any one of Claims 1 to 3, characterized in that the starch hydrolysis product comprises a dextrin.

5. Salt according to Claim 4, characterized in that the dextrin is selected from maltodextrins having a dextrose equivalent ratio of 5 to 10.

6. Salt according to any one of Claims 1 to 5, characterized in that the sweetening substance comprises 95 to 98% by weight of the starch hydrolysis product and 2 to 5% by weight of the dipeptide.

7. Salt according to any one of Claims 1 to 6, characterized in that it comprises, in addition, 0.5 to 10% by weight of a magnesium compound.

8. Salt according to Claim 7, characterized in that the magnesium compound comprises, by weight of dry matter, at least 95% of magnesium sulphate and at least 2% of magnesium carbonate.

9. Salt according to any one of Claims 1 to 8, characterized in that the alkali metal chloride comprises 60 to 67% by weight of potassium chloride and 33 to 40% by weight of sodium chloride.

10. Salt according to Claim 9, comprising, by weight of dry matter, 52 to 60% of potassium chloride, 30 to 38% of sodium chloride, 6 to 8% of magnesium sulphate, 0.6 to 0.8% of magnesium carbonate, 2.0 to 2.5% of maltodextrin and 0.05 to 0.1% of α-L-aspartyl-L-phenylalanine methyl ester (aspartame).

11. Salt according to any one of Claims 1 to 9, characterized in that it comprises, in addition, at least one additive in an amount equal to not more than 16% by weight.

## Patentansprüche

1. Nährsalz, das pro 100 Gewichtsteile wasserfreier Substanz 82 bis 98 Teile Alkalimetallchlorid und 2 bis 18 Teile eines Süßstoffs umfaßt, wobei das Alkalimetallchlorid mehr als 20 Gew.-% Kaliumchlorid umfaßt, und der Süßstoff ein Dipeptid und ein Stärkehydrolyseprodukt umfaßt.

2. Salz gemäß Anspruch 1, dadurch gekennzeichnet, daß das Dipeptid unter den von L-Aspartyl-L-phenylalanin abgeleiteten Alkylestern, ihren Salzen und ihren Metallkomplexen ausgewählt ist.

3. Salz gemäß Anspruch 2, dadurch gekennzeichnet, daß das Dipeptid α-L-Aspartyl-L-phenylalaninmethylester (Aspartam) umfaßt.

4. Salz gemäß einem der Ansprüche 1 bis 3, dadurch gekennzeichnet, daß das Stärkehydrolyseprodukt ein Dextrin umfaßt.

5. Salz gemäß Anspruch 4, dadurch gekennzeichnet, daß das Dextrin unter den Maltodextrinen ausgewählt ist, die ein Dextrose-Äquivalent von 5 bis 10 aufweisen.

6. Salz gemäß einem der Ansprüche 1 bis 5, dadurch gekennzeichnet, daß der Süßstoff 95 bis 98 Gew.-% des Stärkehydrolyseprodukts und 2 bis 5 Gew.-% des Dipeptids umfaßt.

7. Salz gemäß einem der Ansprüche 1 bis 6, dadurch gekennzeichnet, daß es außerdem 0,5 bis 10 Gew.-% einer Magnesiumverbindung umfaßt.

8. Salz gemäß Anspruch 7, dadurch gekennzeichnet, daß die Magnesiumverbindung, bezogen auf das Gewicht der Trockensubstanz, wenigstens 95% Magnesiumsulfat und wenigstens 2% Magnesiumcarbonat umfaßt.

9. Salz gemäß einem der Ansprüche 1 bis 8, dadurch gekennzeichnet, daß das Alkalimetallchlorid 60 bis 67 Gew.-% Kaliumchlorid und 33 bis 40 Gew.-% Natriumchlorid umfaßt.

10. Salz gemäß Anspruch 9, das, bezogen auf das Gewicht der Trockensubstanz, 52 bis 60% Kaliumchlorid, 30 bis 38% Natriumchlorid, 6 bis 8% Magnesiumsulfat, 0,6 bis 0,8% Magnesiumcarbonat, 2,0 bis 2,5% Maltodextrin und 0,05 bis 0,1% α-L-Aspartyl-L-phenylalaninmethylester (Aspartam) umfaßt.

11. Salz gemäß einem der Ansprüche 1 bis 9, dadurch gekennzeichnet, daß es außerdem wenigstens einen Zusatzstoff in einer Menge von maximal 16 Gew.-% enthält.
